# EUROPEAN PATENT APPLICATION

(11) **EP 4 431 307 A1**
(43) Date of publication of application: **18.09.2024**
(21) Application number: 24161678.8
(22) Date of filing: 06.03.2024
(51) Int. Cl.: B60B 27/00, B60R 16/023, B60R 16/027, B60W 40/12

(54) **TIRE ASSEMBLY AND TIRE FORCE ESTIMATION SYSTEM**

(30) Priority: 15.03.2023 JP 2023040839
(71) Applicant: Toyo Tire Corporation, Itami-shi, Hyogo 664-0847 (JP)
(72) Inventor: TSUJI, Noriyuki, Itami-shi, Hyogo, 664-0847 (JP)
(74) Representative: Müller-Boré & Partner Patentanwälte PartG mbB

(57) **Abstract**

A tire assembly (1) includes: a tire body (10); a wheel (20); and a sensor (3, 30). The wheel (20) is mounted on the tire body (10) and connected to an axle (8) on a vehicle side. The sensor (3, 30) is arranged on an outer surface of the wheel (20) and measures a physical quantity produced as the vehicle travels.

## Description

The present disclosure relates to a tire assembly in which a wheel is attached to a tire body, and a tire force estimation system.

Various sensors are attached to a pneumatic tire mounted on a vehicle to estimate tire wear and tire force.

Patent Literature 1 describes an arithmetic operation model generation system for calculating tire force. An arithmetic model generation system comprises: an information acquisition unit structured to acquire acceleration of a tire; a tire force calculator including an arithmetic model structured to calculate tire force based on the acceleration, and the tire force calculator structured to calculate the tire force using the arithmetic model by inputting the acceleration acquired by the information acquisition unit; and an arithmetic model update unit structured to compare tire axial force measured by the tire and the tire force calculated by the tire force calculator and update the arithmetic model.

Patent Literature 1: Japanese Unexamined Patent Application Publication No. 2020-104790

In the arithmetic operation model generation system described in Patent Literature 1, an example in which an acceleration sensor is arranged in the inner cavity of a pneumatic tire is shown. In order to estimate the tire force accurately, the acceleration sensor is preferably arranged in the tread part in the inner cavity of the tire. In the case the acceleration sensor is arranged in the inner cavity of the tire, however, there is a problem in that the configuration for supplying power to the acceleration sensor will be complicated, and it is difficult to replace or repair the sensor in the event of a failure.

The present disclosure addresses the issues described above, and a purpose thereof is to provide a tire assembly and a tire force estimation system equipped with a sensor that is easily accessible from outside.

An embodiment of the present disclosure relates to a tire assembly. The tire assembly includes: a tire body; a wheel mounted on the tire body and connected to an axle on a vehicle side; and a sensor that is arranged on an outer surface of the wheel and measures a physical quantity produced as the vehicle travels.

An embodiment of the present disclosure relates to a tire force estimation system. The tire force estimation system includes the tire assembly above and includes: a sensor information acquisition unit that acquires a physical quantity measured by the sensor; and an estimation processing unit that includes an arithmetic operation model adapted to calculate the tire force based on the physical quantity of the tire and estimates the tire force by inputting the physical quantity acquired by the sensor information acquisition unit to the arithmetic operation model.

According to the present invention, the sensor arranged in the tire assembly is easily accessible from outside.

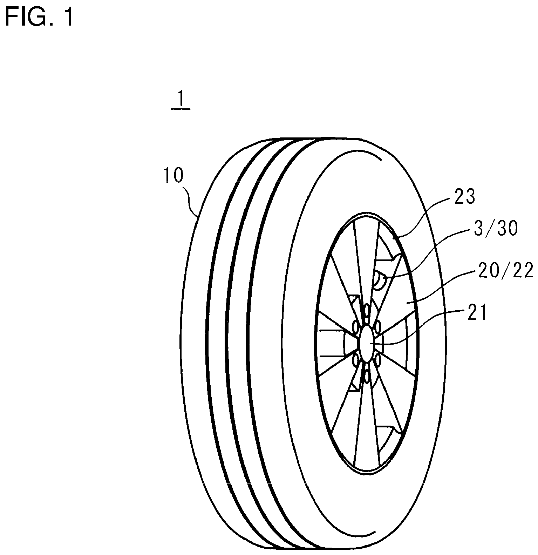

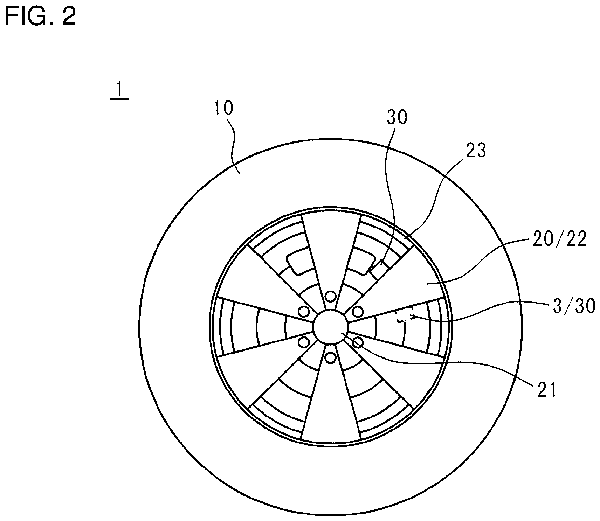

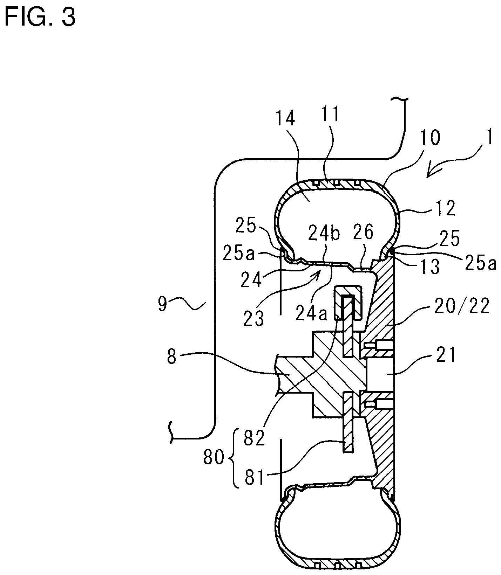

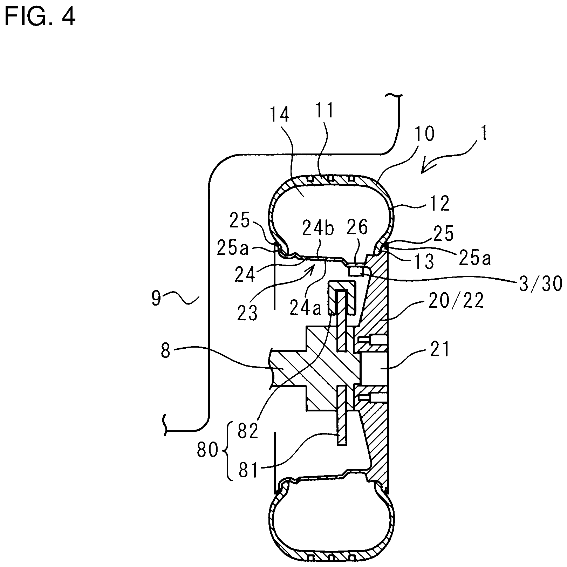

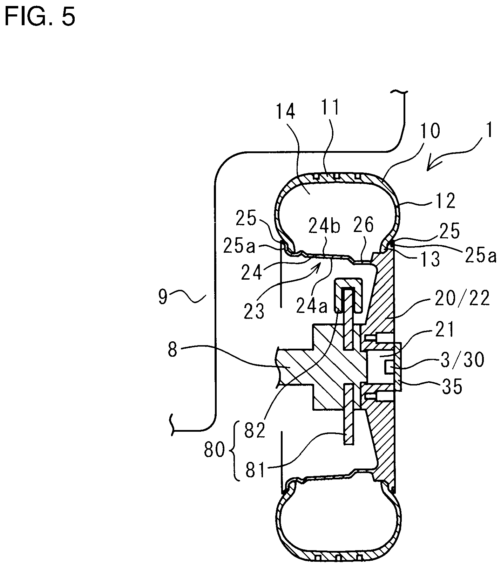

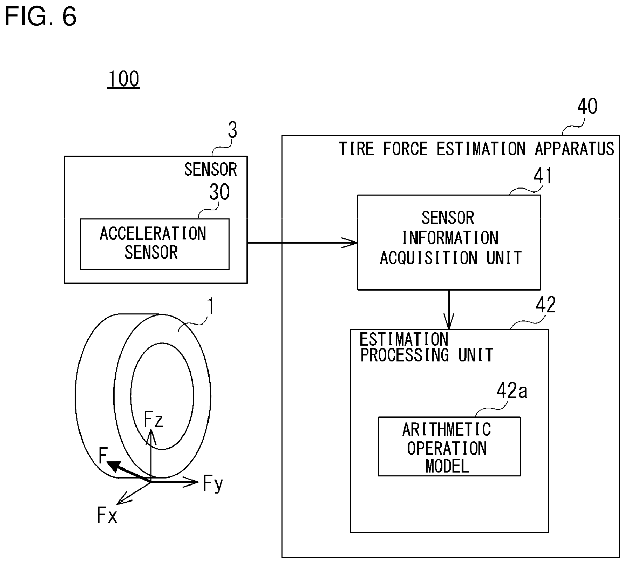

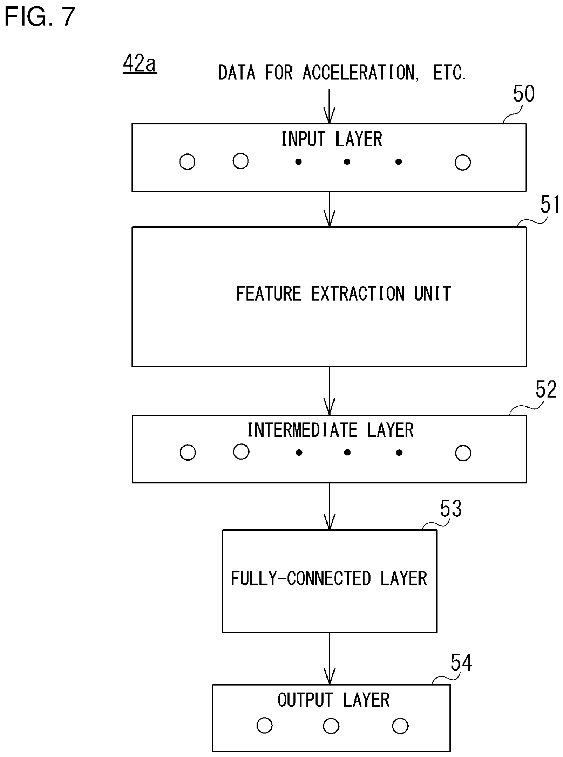

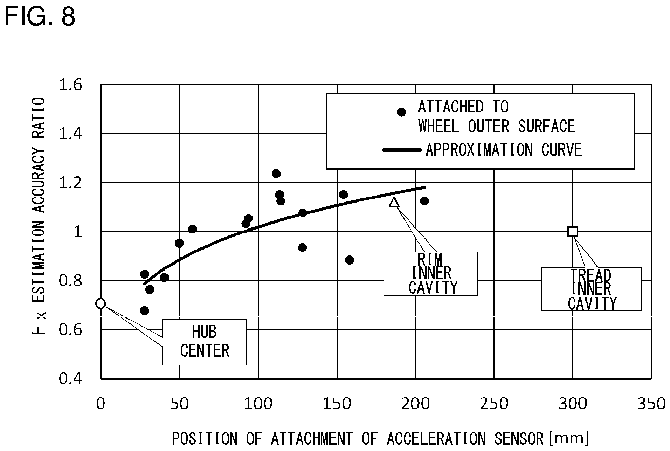

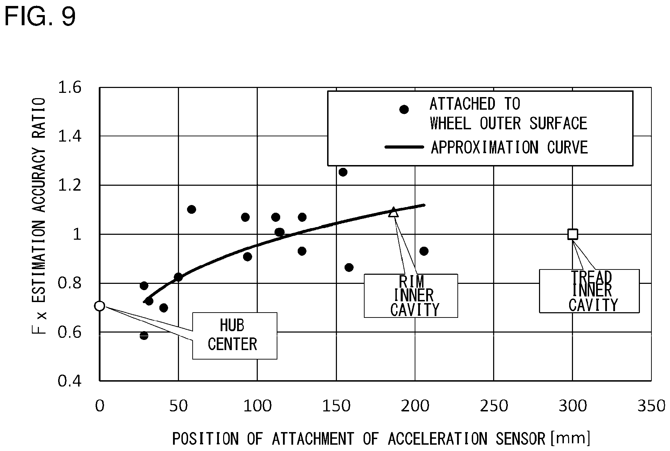

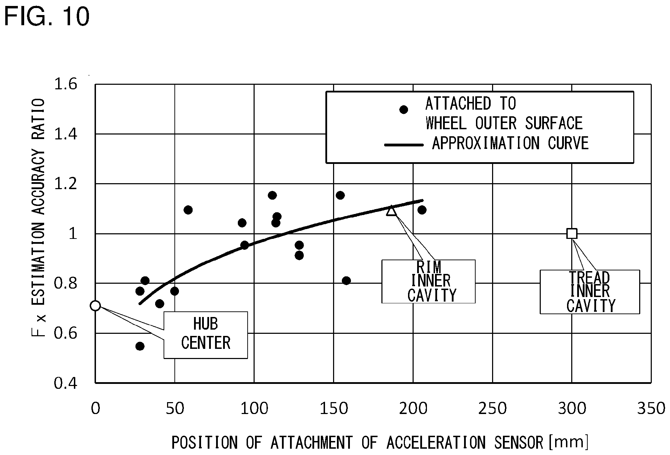

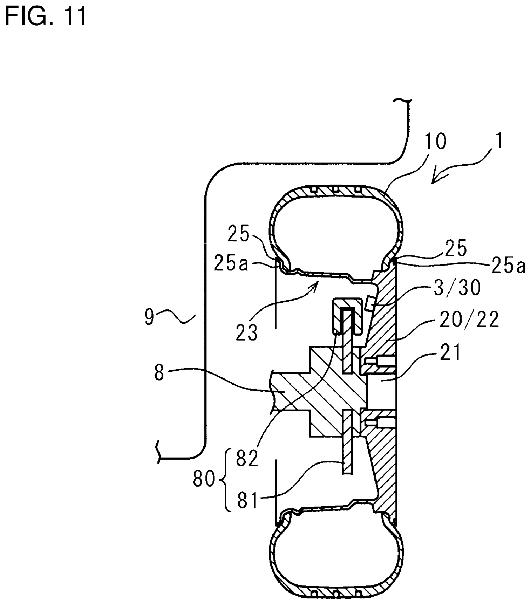

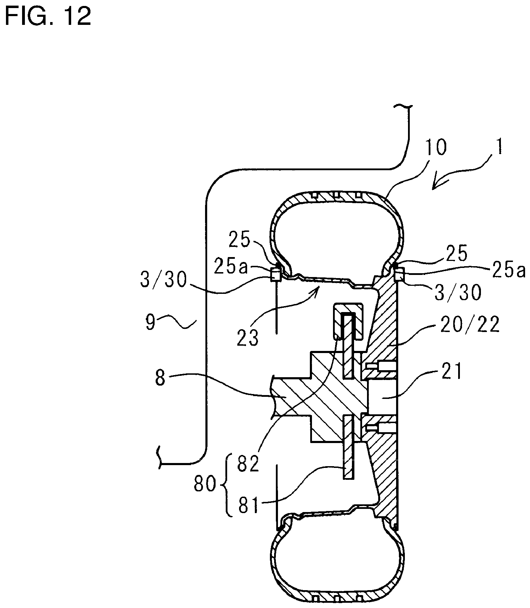

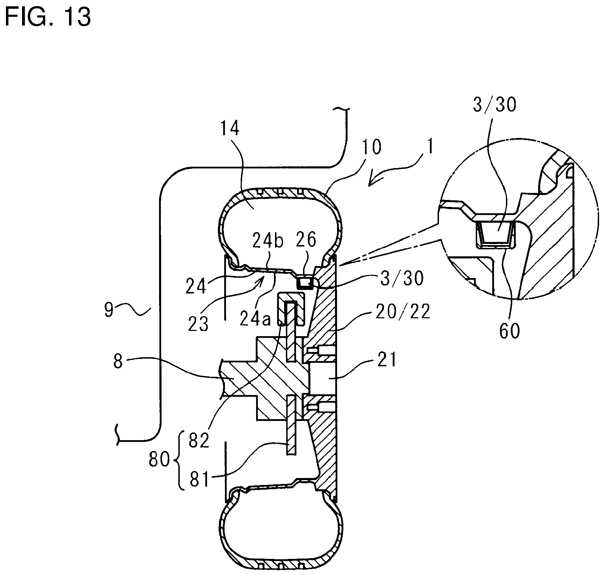

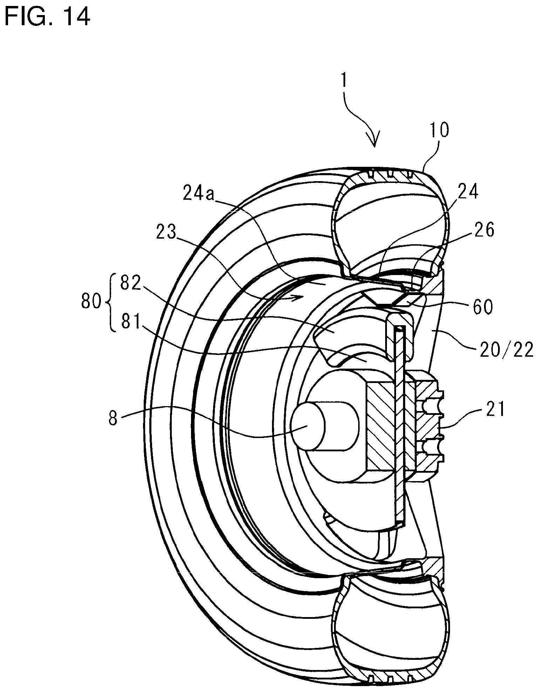

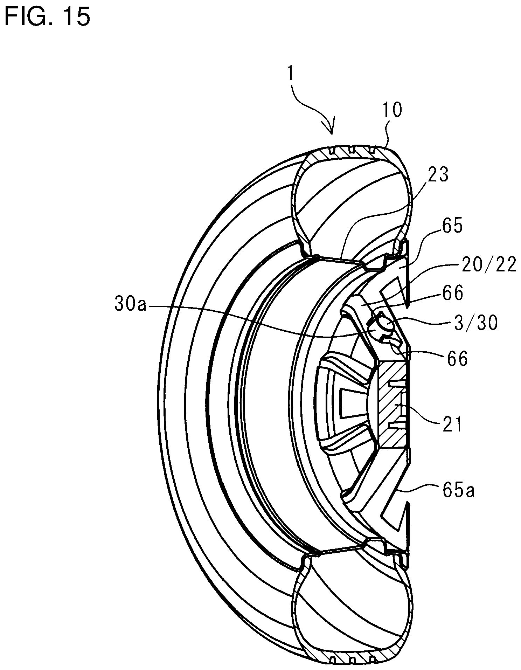

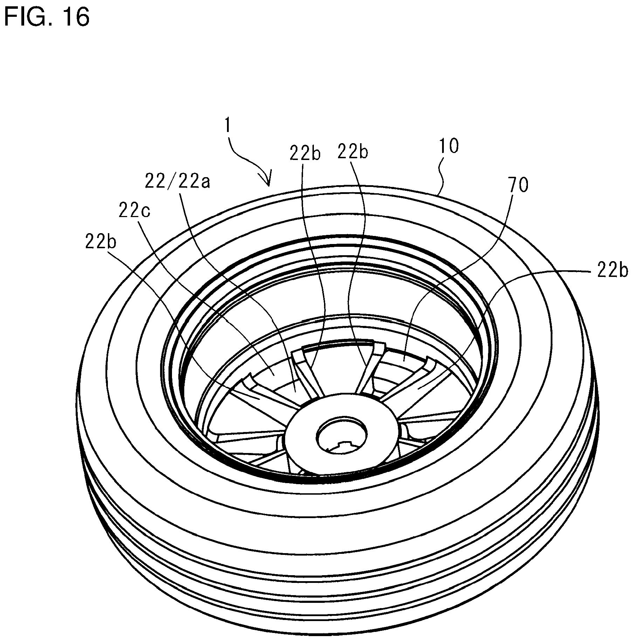

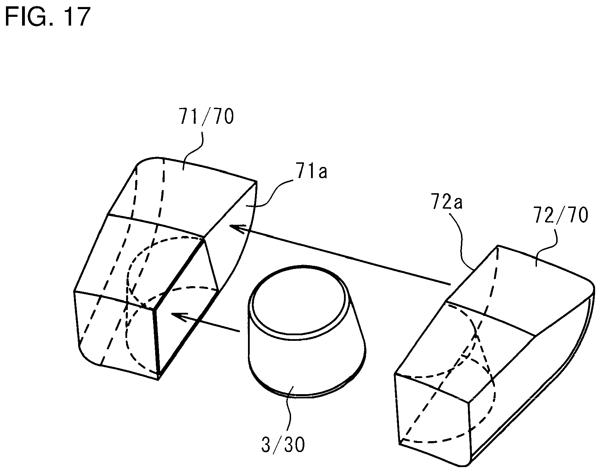

Fig. 1 is a perspective view showing an appearance of a tire assembly according to the embodiment; Fig. 2 is a side view of the tire assembly; Fig. 3 is a longitudinal cross-sectional view of the tire assembly; Fig. 4 is a longitudinal cross-sectional view of the tire assembly in which the acceleration sensor is attached to the rim; Fig. 5 is a longitudinal cross-sectional view of the tire assembly in which the acceleration sensor is attached to the hub; Fig. 6 is a block diagram showing a functional configuration of a tire force estimation system; Fig. 7 is a schematic diagram showing a configuration of the arithmetic operation model; Fig. 8 is a graph showing the accuracy of estimation of the tire force Fx in the longitudinal direction; Fig. 9 is a graph showing the accuracy of estimation of the tire force Fy in the tire axial direction; Fig. 10 is a graph showing the accuracy of estimation of the tire force Fz in the vertical direction; Fig. 11 is a longitudinal cross-sectional view of the tire assembly showing another example in which the acceleration sensor is arranged on the spoke; Fig. 12 is a longitudinal cross-sectional view of the tire assembly in which the acceleration sensor is arranged on the rim end; Fig. 13 is a longitudinal cross-sectional view of the tire assembly according to a further example in which the acceleration sensor is attached to the rim; Fig. 14 is a perspective cross-sectional view of the tire assembly according to the further example in which the acceleration sensor is attached to the rim; Fig. 15 is a perspective cross-sectional view of the tire assembly according to a further example in which the acceleration sensor is attached to the spoke; Fig. 16 is a perspective view of the tire assembly according to a still further example in which the acceleration sensor is attached to the spoke; and Fig. 17 is an exploded perspective view of the cover and the acceleration sensor.

Hereinafter, the present disclosure will be described based on a preferred embodiment with reference to Figs. 1 through 17. Identical or like constituting elements and members shown in the drawings are represented by identical symbols and a duplicate description will be omitted as appropriate. The dimension of members in the drawings shall be enlarged or reduced as appropriate to facilitate understanding. Those of the members that are not material to the description of the embodiments are omitted in the drawings.

(Embodiment) Fig. 1 is a perspective view showing an appearance of a tire assembly 1 according to the embodiment, and Fig. 2 is a side view of the tire assembly 1. The tire assembly 1 includes a tire body 10, a wheel 20, and a sensor 3. The tire assembly 1 is a pneumatic tire in which a wheel 20 is attached to the tire body 10. The wheel 20 is mounted on the tire body 10. The wheel 20 is fitted in the center of the tire body 10 in the tire radial direction. A hub 21 is formed in the radial center portion of the wheel 20. The tire assembly 1 is attached to the axle on the vehicle side by the hub 21.

The sensor 3 is attached to the outer surface of the wheel 20 by an adhesive, a double-sided tape, or the like. The sensor 3 may not be attached using an adhesive or the like and may be detachably attached to the wheel 20 using a fastening component such as a screw. The sensor 3 measures a physical quantity produced as the vehicle travels at a position of installation in the tire assembly 1. The sensor 3 is, for example, an acceleration sensor 30. The sensor 3 may be other than the acceleration sensor 30 and may be, for example, a strain sensor. In the following description, the case where the sensor 3 is an acceleration sensor 30 will be described as an example, but the embodiment can be configured to provide the function equally using a sensor other than the acceleration sensor 30.

The acceleration sensor 30 measures the acceleration (physical quantity) in the three axial directions, i.e., the circumferential, axial, and radial directions in the tire assembly 1. In the example shown in Fig. 1, the acceleration sensor 30 is attached to a spoke 22 of the wheel 20. The spoke 22 extends radially from the hub 21 of the wheel 20 and connects the hub 21 and a rim 23. The acceleration sensor 30 is attached to the outer surface of the wheel 20 and can be accessed from outside to attach, detach, and replace the battery.

The tire body 10 is mainly made of a carboncontaining rubber material. The size of the tire body 10 is, for example, 195/65R15 in the tire size representation, which indicates a tire width of 195 mm, a tire profile of 65%, a radial structure, and a rim diameter of 15 inches. The wheel 20 is mainly made of a metal material using integral molding. The acceleration sensor 30 is sensor of piezoelectric type, servo type, strain gauge type, semiconductor type, etc. capable of measuring acceleration. The acceleration sensor 30 is configured by incorporating a sensor portion for measuring acceleration, a wireless communication circuit, and a battery (not shown) in one housing. One or both of the wireless communication circuit and the battery may be attached to the wheel 20 as a separate body and may be electrically connected to the acceleration sensor 30 with a signal line.

Fig. 3 is a longitudinal cross-sectional view of the tire assembly 1. Fig. 3 also shows the structure on the vehicle side such as the axle and the housing. The tire body 10 comes into contact with the ground by a tread part 11 formed in a ring shape. A side part 12 is provided in continuation with both ends of the tread part 11 in the tire axial direction (tire width direction), and a bead 13 is formed at a position corresponding to a rim end 25 of the side part 12 toward the wheel 20.

The wheel 20 is provided so that the spoke 22 extends radially around the cylindrical hub 21 connected to the axle. The spoke 22 supports the cylindrical rim 23 connected to the outer circumferential edge. A tire inner cavity 14 is formed as a space enclosed by the tire body 10 and the rim 23 and is filled with air.

The rim 23 has the rim ends 25 on both sides of a body part 24 in the tire width direction. Each rim end 25 is provided so that it bends and extends outward in the radial direction as it extends outward in the tire width direction. The bead 13 of the tire body 10 is fitted in the rim end 25.

In the body part 24 between the rim ends 25, a recess 26 is formed in the center in the tire width direction, etc. over the entire circumference so as to penetrate toward the radial center. In the example shown in Fig. 3, the recess 26 is formed at a position closer to the spoke 22 in the tire width direction. High rigidity and weight reduction of the rim 23 can be achieved by providing the recess 26 in the body part 24 of the wheel 20. The recess 26 may not be provided, and, in this case, an inner circumferential surface 24a of the body part 24 is formed in a flat shape in the tire width direction.

In the wheel 20, the outer surface exposed outside presents itself on the hub 21, the spoke 22, and the rim 23. The outer surface of the rim 23 exposed outside is the inner circumferential surface 24a of the body part 24 and an outer surface 25a of the rim end 25. An outer circumferential surface 24b of the body part 24 of the rim 23 faces the tire inner cavity 14 and does not represent the outer surface exposed to outside.

Mechanical components 80 such as a brake rotor 81 and a caliper 82 are attached to the axle 8. The tire assembly 1 is mounted on the axle 8 in a state of being covered by the vehicle side housing 9.

The position of attachment of the acceleration sensor 30 will be described. The acceleration sensor 30 is attached at any position in the radial direction from the hub 21 to the rim 23. The acceleration sensor 30 shown in Fig. 2 in the solid line is provided on one side surface of the spoke 22 that intersects the tire circumferential direction. As indicated by the dashed line in Fig. 2, the acceleration sensor 30 may be attached to other side surface of the spoke 22 that intersects the tire circumferential direction. The acceleration sensor 30 is arranged at a position where mechanical interference with the mechanical components 80 on the side of the axle 8 such as the brake rotor 81 and the caliper 82 is avoided.

Fig. 4 is a longitudinal cross-sectional view of the tire assembly 1 in which the acceleration sensor 30 is attached to the rim 23. As shown in Fig. 4, the acceleration sensor 30 may be attached to the inner circumferential surface 24a of the body part 24. In the case the recess 26 is provided on the rim 23 of the wheel 20, the acceleration sensor 30 may be attached to the inner circumferential surface 24a corresponding to the position of the recess 26.

The acceleration sensor 30 is arranged at a position where mechanical interference with the mechanical components 80 on the axle 8 side such as the brake rotor 81 and the caliper 82 is avoided. The acceleration sensor 30 attached to the inner circumferential surface 24a faces the side of the vehicle side housing 9, and exposure to a space outside the tire assembly 1 (outward in the tire axial direction) is mitigated.

Fig. 5 is a longitudinal cross-sectional view of the tire assembly 1 in which the acceleration sensor 30 is attached to the hub 21. Referring to Fig. 5, a circular plate-shaped support member 35 is attached to the hub 21, and the acceleration sensor 30 is attached to the support member 35. Attaching the acceleration sensor 30 to the outer surface of the wheel 20 is inclusive of providing the support member 35 on the outer surface of the wheel 20 and attaching the acceleration sensor 30 to the support member 35.

Fig. 6 is a block diagram showing a functional configuration of a tire force estimation system 100. The tire force estimation system 100 includes the tire assembly 1 and a tire force estimation apparatus 40. The acceleration sensor 30 is attached to the tire assembly 1 as described above.

The tire force estimation apparatus 40 includes a sensor information acquisition unit 41 and an estimation processing unit 42. The tire force estimation apparatus 40 is an information processing apparatus such as a PC (personal computer). The parts in the tire force estimation apparatus 40 are implemented in hardware such as a processing circuit comprised of an electronic element exemplified by a CPU of a computer and a mechanical component, and in software such as a computer program. Fig. 6 depicts functional blocks implemented by the cooperation of these parts. Therefore, it will be understood by those skilled in the art that the functional blocks may be implemented in a variety of manners by a combination of hardware and software.

The sensor information acquisition unit 41 acquires, by wireless communication, etc., information on the acceleration (physical quantity) measured by the acceleration sensor 30. The estimation processing unit 42 includes an arithmetic operation model 42a, inputs the information on the acceleration input from the sensor information acquisition unit 41 to the arithmetic operation model 42a, and estimates a tire force F. As shown in Fig. 6, the tire force F has components in the three axial directions, i.e., a tire force Fx in the longitudinal direction of the tire assembly 1, a tire force Fy in the tire axial direction, and a tire force Fz in the vertical direction. The estimation processing unit 42 may calculate all of these components in the three axial directions, calculate at least one of the components, or calculate an arbitrary combination of two components.

A learning type model such as a neural network is used for the arithmetic operation model 42a. Fig. 7 is a schematic diagram showing a configuration of the arithmetic operation model 42a. The arithmetic operation model 42a is of a CNN (Convolutional Neural Network) type and is a learning type model provided with convolution operation and pooling operation used in the so-called LeNet, which is a prototype of CNN. Fig. 7 shows an example in which acceleration data in the three axial directions is used as input data input to the arithmetic operation model 42a, and the tire force in the three axial directions is output.

The arithmetic operation model 42a includes an input layer 50, a feature extraction unit 51, an intermediate layer 52, a fully-connected unit 53, and an output layer 54. Time series data for acceleration in the three axial directions acquired by the sensor information acquisition unit 41 is input to the input layer 50. The acceleration data is measured by the acceleration sensor 30 on a timeseries basis. Data for a predetermined time segment is extracted by a window function for use as the input data.

Acceleration measured in the tire assembly 1 exhibits periodicity per rotation of the tire assembly 1. The time segment of input data extracted by the window function may, for example, be a period of time corresponding to the period of rotation of the tire assembly 1 to impart the input data itself with a periodicity. The window function may extract input data in a time segment shorter or longer than one rotation of the tire assembly 1. The arithmetic operation model 42a can be trained so long as the extracted input data at least includes periodical information.

The feature extraction unit 51 extracts a feature amount by using a convolution operation, a pooling operation, etc. and transmits the feature amount to the nodes of the intermediate layer 52. The feature extraction unit 51 executes a convolutional operation by applying a plurality of filters to the input data. The convolutional operation executes the convolutional operation by moving the filter relative to the time series input data for acceleration. In the pooling operation, the data from the convolutional operation is subjected to a maximum pooling operation that, for example, selects the larger of the two values arranged in a time sequence. The feature extraction unit 51 extracts a feature amount by repeating a convolutional operation, a pooling operation, etc.

The fully-connected unit 53 fully connects the data from the nodes of the intermediate layer 52 in one or a plurality of layers and outputs the tire forces Fx, Fy, and Fz to the nodes of the output layer 54. The fully-connected unit 53 executes an operation via fully-connected paths on which weighted liner operation, etc. is executed. In addition to a linear operation, the fully-connected unit 53 may execute a non-linear operation by using an activating function, etc. The tire force F in the three axial directions is output to the nodes of the output layer 54.

Further, the arithmetic operation model 42a can be trained by mounting, to an actual vehicle, the tire assembly 1 of a specification adapted to the vehicle and by test driving the vehicle. The specification of the tire assembly 1 includes information related to tire performance such as tire size, tire width, tire profile, tire strength, tire outer diameter, road index, and year/month/date of manufacturing.

Accuracy of estimation of the tire force F at each position of the acceleration sensor 30 will be described. Fig. 8 is a graph showing the accuracy of estimation of the tire force Fx in the longitudinal direction. Fig. 9 is a graph showing the accuracy of estimation of the tire force Fy in the tire axial direction. Fig. 10 is a graph showing the accuracy of estimation of the tire force Fz in the vertical direction. In Figs. 8 to 10, the horizontal axis represents a distance in the tire radial direction from the center of the tire assembly 1 to the position where the acceleration sensor 30 is arranged.

In Figs. 8 to 10, the vertical axis represents an estimated accuracy ratio. Assuming the case in which the acceleration sensor 30 is attached to the side of the tread part 11 toward the tire inner cavity 14, it is considered that the behavior of the tire body 10 is easily reflected in the tire force F generated between the tire assembly 1 and the road surface while the vehicle is traveling so that the accuracy of estimation will be favorable. The estimation accuracy ratio is calculated as a value obtained by dividing the estimation accuracy in the case the acceleration sensor 30 is arranged on the surface of the tread part 11 toward the tire inner cavity 14 by the estimation accuracy in the case the acceleration sensor 30 is arranged at another position. The estimated accuracy ratio in the case the acceleration sensor 30 is arranged on the surface of the tread part 11 toward the tire inner cavity 14 is 1. The tire force F is estimated using the arithmetic operation model 42a trained only with the acceleration data acquired at each position of the acceleration sensor 30. The arithmetic operation model 42a is trained and built for each position of the acceleration sensor 30. The actual measured value of the tire force F, which will be a reference for estimation accuracy, can be measured with a six-component force sensor by, for example, conducting a test run of the vehicle. The six-component force sensor measures the tire force in the three axial directions and the moment around each axis.

Estimation accuracy is determined by determining the mean absolute error (MAE) between the estimated value and the measured value. When the estimation accuracy ratio is greater than 1, it indicates that the mean absolute error is small and the estimation accuracy is good. When the estimation accuracy ratio is less than 1, it means that the mean absolute error is large and the estimation accuracy is poor.

The dot represented by a white rectangular mark in Figs. 8 to 10 indicates a case in which the acceleration sensor 30 is arranged on the surface of the tread part 11 toward the tire inner cavity 14 (tread inner cavity). The dot represented by a white triangular mark indicates a case in which the acceleration sensor 30 is arranged on the surface (outer circumferential surface 24b) of the rim 23 toward the tire inner cavity 14 (rim inner cavity). The dot represented by a white circle indicates a case (the case of Fig. 5) in which the acceleration sensor 30 is arranged at the central position of the hub 21.

The black dots in Figs. 8 to 10 indicate cases in which the acceleration sensor 30 is arranged on the outer surface of the wheel 20. The outer surface of the wheel 20 presents itself on the hub 21, the spoke 22, and the rim 23, as described above. The approximation curve is a curve obtained by power approximation for cases in which the acceleration sensor 30 is arranged on the outer surface of the wheel 20.

The estimated accuracy ratio of the tire forces Fx, Fy and Fz based on the acceleration sensor 30 arranged on the hub 21 is 0.7 or more. Provided that this estimated accuracy ratio is tolerated, it is considered that the acceleration sensor 30 may be arranged on the hub 21 of the tire assembly 1.

The approximation curve determined based on cases in which the acceleration sensor 30 is arranged on the outer surface of the wheel 20 is an upward sloping curve with respect to the tire forces Fx, Fy and Fz. The approximation curve reveals that the accuracy of estimation of the tire force F improves as the position of attachment of the acceleration sensor 30 moves away from the center of the tire assembly 1 in the tire radial direction.

The position of attachment of the acceleration sensor 30 that results in the estimated accuracy ratio of 0.95 or more as determined in all of the tire forces Fx, Fy and Fz approximation curves, respectively, is 98 mm from the center of the wheel 20. In this example, the radius of the rim 23 of the wheel 20 is 190.5 mm. The position of 98 mm from the center of the wheel 20 corresponds to the position of 51.4% of the radius of the rim 23. It can therefore be said that it is preferable to arrange the acceleration sensor 30 outward of the position of 50% of the radius of the rim 23 in the tire radial direction to fit the estimated accuracy ratio of the tire force F in a range of favorable values near 0.95.

The position of attachment of the acceleration sensor 30 that results in the estimated accuracy ratios of 1 or more as determined in all of the tire forces Fx, Fy and Fz approximation curves, respectively, is 124 mm from the center of the wheel 20. The position of 124 mm from the center of the wheel 20 corresponds to the position of 65.1% of the radius of the rim 23. It can therefore be said that it is more preferable to provide the acceleration sensor 30 outward of the position of 65% of the radius of the rim 23 in the tire radial direction to fit the estimated accuracy ratio of the tire force F in a range of favorable values near 1.

In the tire assembly 1, the acceleration sensor 30 is arranged on the outer surface of the wheel 20 so that access to the acceleration sensor 30 from outside is facilitated. The acceleration sensor 30 can be accessed from outside for repair or replacement. In the case the acceleration sensor 30 has a built-in battery, the arrangement makes it easy to remove the sensor from the wheel 20 to replace battery. The acceleration sensor 30 can be configured to allow battery replacement without requiring removing the sensor from the wheel 20, by providing a mechanism that allows access from outside to replace the battery. Further, non-contact power supply from the vehicle or from outside the vehicle is facilitated by configuring the tire assembly 1 so that the acceleration sensor 30 is arranged on the outer surface of the wheel 20.

The acceleration sensor 30 may be attached to the inner circumferential surface 24a of the body part 24 in the rim 23. The mechanical components 80 provided on the side of the axle 8 are arranged around the inner circumferential surface 24a, and the acceleration sensor 30 is arranged at a position where mechanical interference with the mechanical components 80 is avoided.

The acceleration sensor 30 may be arranged on the hub 21, although the accuracy of estimation of the tire force F may be lower as described above. The hub 21 is the center of rotation of the tire assembly 1, and provision on the hub 21 can suppress eccentricity of the tire assembly 1 due to the acceleration sensor 30.

The acceleration sensor 30 may also be arranged on the spoke 22 of the wheel 20. The spoke 22 extends in the tire radial direction, and a large space is available to provide the acceleration sensor 30. Further, providing the acceleration sensor 30 on the spoke 22 can improve the accuracy of estimation of the tire force F better than providing it on the hub 21.

In the case the acceleration sensor 30 is arranged on the spoke 22, the accuracy of estimation of the tire force F will be favorable by providing the acceleration sensor 30 outward, in the tire radial direction, of the position of 50% of the radius of the rim 23 defined from the tire rotational axis, as described above.

Further, in the case the acceleration sensor 30 is arranged on the spoke 22, the accuracy of estimation of the tire force F will be further improved by providing the acceleration sensor 30 outward, in the tire radial direction, of the position of 65% of the radius of the rim 23 defined from the tire rotational axis, as described above.

(Variation) Fig. 11 is a longitudinal cross-sectional view of the tire assembly 1 showing another example in which the acceleration sensor 30 is arranged on the spoke 22. Referring to Fig. 11, the acceleration sensor 30 is arranged on the surface of the spoke 22 facing the vehicle side housing 9. The acceleration sensor 30 is arranged at a position shielded from view by the spoke 22 of the tire assembly 1 when viewed from outside of the vehicle.

By providing the acceleration sensor 30 on the surface of the spoke 22 facing the vehicle side housing 9, it is possible to avoid collision of foreign objects such as pebbles and mud while the vehicle is traveling. In this case, too, the acceleration sensor 30 is arranged at a position where mechanical interference with the mechanical components 80 is avoided.

Fig. 12 is a longitudinal cross-sectional view of the tire assembly 1 in which the acceleration sensor 30 is arranged on the rim end 25. Arranging the acceleration sensor 30 on the rim 23 is inclusive of arranging the acceleration sensor 30 on the rim end 25. By arranging the acceleration sensor 30 on the rim 23, the accuracy of estimation of the tire force will be favorable. If the acceleration sensor 30 cannot be arranged on the body part 24 properly, the sensor may be arranged on the outer surface 25a of the rim end 25.

Fig. 13 is a longitudinal cross-sectional view of the tire assembly 1 according to a further example in which the acceleration sensor 30 is attached to the rim 23. Fig. 14 is a perspective cross-sectional view of the tire assembly 1 according to the further example in which the acceleration sensor 30 is attached to the rim 23. As shown in Fig. 13, the acceleration sensor 30 is attached to the inner circumferential surface 24a of the body part 24. In the case the recess 26 is provided on the rim 23 of the wheel 20, the acceleration sensor 30 may be attached to the inner circumferential surface 24a corresponding to the position of the recess 26. The tire assembly 1 of the further example includes a cover 60 that covers the acceleration sensor 30. The cover 60 is arranged at a position where mechanical interference with the mechanical components 80 on the side of the axle 8 such as the brake rotor 81 and the caliper 82 is avoided. The cover 60 has a gap to the acceleration sensor 30 and is attached to the inner circumferential surface 24a of the body part 24. The cover 60 is attached to the inner circumferential surface 24a by an adhesive, a double-sided tape, a fastening member such as a screw or the like.

As shown in Fig. 14, the cover 60 has a shape of a truncated cone or polygonal column having a tire circumferential dimension that is progressively larger outward in the tire radial direction. Providing the cover 60 that covers the acceleration sensor 30 makes it difficult for the heat generated in the mechanical components on the vehicle side to be transmitted to the acceleration sensor 30. The cover 60 also prevents a stone, etc. from hitting the acceleration sensor 30 directly while the vehicle is traveling.

Fig. 15 is a perspective cross-sectional view of the tire assembly 1 according to a further example in which the acceleration sensor 30 is attached to the spoke 22. The acceleration sensor 30 is provided on one side surface of the spoke 22 that intersects the tire circumferential direction. The tire assembly 1 includes a wheel cap 65. The wheel cap 65 covers the side surface of the wheel 20. The wheel cap 65 includes a gripping part 66 for gripping a side surface 30a of the acceleration sensor 30. A cut-out part 65a may be provided in the wheel cap 65 to reduce the weight.

The gripping part 66 is comprised of two rod-like members and is provided to sandwich the acceleration sensor 30 from both sides, i.e., the central side and the outer side, in the tire radial direction. The gripping part 66 is fixed to the wheel cap 65. The gripping part 66 prevents the displacement of the acceleration sensor 30 in the tire radial direction.

Fig. 16 is a perspective view of the tire assembly according to a still further example in which the acceleration sensor 30 is attached to the spoke 22. Fig. 17 is an exploded perspective view of a cover 70 and the acceleration sensor 30. Referring to Fig. 16, the spoke 22 includes a plate-shaped member 22a having a plate surface that intersects the tire axial direction of the tire assembly 1 and a side wall member 22b extending from the side edges on both sides of the plate-shaped member 22a to the vehicle side housing 9 in the tire axial direction. The cross section that intersects the tire radial direction presents a U shape.

The tire assembly 1 includes the cover 70 that covers the acceleration sensor 30. The cover 70 is housed in a U-shaped recess enclosed by the plate-shaped member 22a and the side wall member 22b of the spoke 22. The cover 70 is attached to the plate-shaped member 22a and the side wall member 22b by an adhesive, a double-sided tape, a fastening member such as a screw or the like. Providing the cover 70 in contact with a side surface 22c of the spoke 22 on the outer circumferential side makes it difficult for misalignment to occur due to a centrifugal force while the vehicle is traveling.

As shown in Fig. 17, the cover 70 is comprised of a housing 71 on one side and a housing 72 on the other side, the housings 71 and 72 being derived from halving the whole. The housing 71 and the housing 72 are assembled by using an adhesive, a double-sided tape, etc. such that a side surface 71a and a side surface 72a abut each other. A fastening component such as a screw may be used to assembly the housing 71 and the housing 72. The housing 71 and the housing 72 house the acceleration sensor 30 in a recess formed by penetrating the side surface 71a and the side surface 72a.

Providing the cover 70 that covers the acceleration sensor 30 makes it difficult for the heat generated in the mechanical components on the vehicle side to be transmitted to the acceleration sensor 30. The cover 70 also prevents a stone, etc. from hitting the acceleration sensor 30 directly while the vehicle is traveling.

In the above-described embodiment and variation, the case where the acceleration sensor 30 is used as the sensor 3 has been described as an example, but a strain sensor or the like may be used as the sensor 3. The strain sensor is exemplified by a strain gauge in which the amount of strain measured changes under the influence of fluctuations in the tire force F that occur as the vehicle travels. The arithmetic operation model 42a that receives information from the strain sensor on the amount of strain in three axial directions as input data and outputs the tire force F may be built. As in the case of the acceleration sensor 30, the arithmetic operation model 42a can be trained by test driving the vehicle.

Given above is a description based on the embodiment of the present disclosure. The embodiment is intended to be illustrative only and it will be understood to those skilled in the art that variations and modifications are possible within the claim scope of the present disclosure and that such variations and modifications are also within the claim scope of the present disclosure. Accordingly, the description and drawings in the specification shall be interpreted as being illustration instead of limitation.

## Claims

1. A tire assembly (1) comprising:
a tire body (10);
a wheel (20) mounted on the tire body (10) and connected to an axle (8) on a vehicle side; and
a sensor (3, 30) that is arranged on an outer surface of the wheel (20) and measures a physical quantity produced as the vehicle travels.

2. The tire assembly (1) according to claim 1,
wherein the sensor (3, 30) is arranged on a rim (23) of the wheel (20).

3. The tire assembly (1) according to claim 2,
wherein the sensor (3, 30) is arranged at a position where mechanical interference with a mechanical component (80) provided on the axle (8) is avoided.

4. The tire assembly (1) according to claim 1,
wherein the sensor (30) is arranged on a hub (21) of the wheel (20).

5. The tire assembly (1) according to claim 1,
wherein the sensor (3, 30) is arranged on a spoke (22) of the wheel (20).

6. The tire assembly (1) according to claim 1,
the sensor (3, 30) is arranged outward, in a tire radial direction, of a position of 50% of a radius of a rim (23) of the wheel (20) defined from a tire rotational axis.

7. The tire assembly (1) according to claim 1,
the sensor (3, 30) is arranged outward, in a tire radial direction, of a position of 65% of a radius of a rim (23) of the wheel (20) defined from a tire rotational axis.

8. The tire assembly (1) according to any one of claims 1 through 7, further comprises a cover (60, 65, 70) that covers the sensor (3, 30).

9. The tire assembly (1) according to claim 5,
the sensor (3,30) is arranged on a surface of the spoke (22) facing a vehicle side housing (9).

10. The tire assembly (1) according to claim 2,
wherein the sensor (3, 30) is arranged on an outer surface of an end of the rim (23).

11. A tire force estimation system (100) that includes the tire assembly (1) according to any one of claims 1 through 10, comprising:
a sensor information acquisition unit (41) that acquires a physical quantity measured by the sensor (3, 30); and
an estimation processing unit (42) that includes an arithmetic operation model (42a) adapted to calculate the tire force based on the physical quantity of the tire and estimates the tire force by inputting the physical quantity acquired by the sensor information acquisition unit (41) to the arithmetic operation model (42a).

12. The tire force estimation system (100) according to claim 11,
wherein the arithmetic operation model (42a) includes a feature extraction unit (51) that executes a convolutional operation in an operation halfway between an input layer (50) and an output layer (54) to extract a feature amount,
wherein the physical quantity of the tire measured by the sensor (3, 30) includes input data extracted in a time segment and arranged in a time sequence, and
wherein the convolutional operation executes an operation by moving a filter relative to the input data arranged in the time sequence.

13. The tire force estimation system (100) according to claim 12,
wherein the feature extraction unit (51) executes a pooling operation in addition to the convolutional operation.
